# EUROPEAN PATENT APPLICATION

(11) **EP 4 737 027 A1**
(43) Date of publication of application: **06.05.2026**
(21) Application number: 24831376.9
(22) Date of filing: 15.04.2024
(51) Int. Cl.: B22D 17/20, B29C 45/52

(54) **BACKFLOW PREVENTION DEVICE AND INJECTION APPARATUS PROVIDED WITH SAME**

(30) Priority: 30.06.2023 JP 2023108729
(71) Applicant: The Japan Steel Works, Ltd., Tokyo 141-0032 (JP)
(72) Inventor: KAWABE, Chikara, Tokyo 141-0032 (JP); YAMAGUCHI, Takeshi, Tokyo 141-0032 (JP)
(74) Representative: Simmons & Simmons LLP (Munich)
(86) International application number: PCT/JP2024/014910
(87) International publication number: WO 2025/004501

(57) **Abstract**

Provided is a backflow prevention device in which a piston ring does not readily enter a gap between a backflow prevention ring and a cylinder. A backflow prevention device 4 of an injection apparatus 3 has a backflow prevention ring 41 having an annular groove 42 facing an inner surface of a cylinder 32 of the injection device 3, and a piston ring 51 fitted in the annular groove 42. The piston ring 51 has a storage part 56 stored in the annular groove 42, and an outer peripheral surface 53 located radially outside of the annular groove 42, and a rear end part 53A in the injection direction of the outer peripheral surface 53 is located in front in the injection direction with respect to the rearmost end part 55 in the injection direction of the storage part 56.

## Description

### Technical Field

This application claims the benefit of Japanese Priority Patent Application No. JP 2023-108729 filed on June 30, 2023, the entire contents of which are incorporated herein by reference.

The present invention relates to a backflow prevention device and to an injection unit provided with same.

### Background Art

An injection unit of an injection molding machine is provided with a backflow prevention device that prevents backflow of injected materials during injection. Japanese Patent Application Laid-Open No. H07(1995)-314510 describes an injection unit comprising a screw that is housed in a cylinder, a push plate that is attached to the screw, and a backflow prevention device that is provided between the screw head of the screw and the push plate. When the screw moves forward during injection, the backflow prevention device is pressed against the push plate, preventing the material to be injected from flowing behind the push plate. The backflow prevention device includes a backflow prevention ring and a piston ring that is fitted into the backflow prevention ring.

### Summary of Invention

The piston ring is provided for the purpose of improving sealing between the backflow prevention device and the cylinder. However, because the screw moves at high speed during injection, the piston ring may deform and may enter the gap between the backflow prevention ring and the cylinder. In this case, not only will the piston ring wear out, but the piston ring that has entered the gap between the backflow prevention ring and the cylinder may damage the cylinder.

The purpose of the present invention is to provide a backflow prevention device in which the piston ring is less likely to enter the gap between the backflow prevention ring and the cylinder.

The backflow prevention device of the present invention comprises a backflow prevention ring that includes an annular groove, and a piston ring that is fitted in the annular groove. The piston ring includes a housed portion that is accommodated in the annular groove and an outer circumferential surface that is located radially outward from the annular groove. The rearward end point of the outer circumferential surface in the injection direction is forward of the rearmost end of the housed portion in the injection direction.

According to the present invention, a backflow prevention device can be provided in which the piston ring is less likely to enter the gap between the backflow prevention ring and the cylinder. The objects, features, and advantages of the present application, above and otherwise, will become apparent from the detailed description set forth below with reference to the accompanying drawings that illustrate the present application.

### Brief Description of the Drawings

[Fig. 1] Fig. 1 is a schematic front view of an injection molding machine according to a first embodiment.
[Fig. 2] Fig. 2 is an enlarged view of area A in Fig. 1.
[Fig. 3] Fig. 3 is an enlarged view of area B in Fig. 2.
[Fig. 4] Fig. 4 is a cross-sectional view along line 4-4 in Fig. 3.
[Fig. 5] Fig. 5 is an enlarged view of an area in a second embodiment that corresponds to area B in Fig. 2.
[Fig. 6] Fig. 6 is an enlarged view of an area in a third embodiment that corresponds to area B in Fig. 2.
[Fig. 7] Fig. 7 is an enlarged view of an area in a fourth embodiment that corresponds to area B in Fig. 2.
[Fig. 8] Fig. 8 is an enlarged view of an area in a fifth embodiment that corresponds to area B in Fig. 2.
[Fig. 9] Fig. 9 is an enlarged view of an area in a sixth embodiment that corresponds to area B in Fig. 2.
[Fig. 10] Fig. 10 is an enlarged view of an area in a seventh embodiment that corresponds to area B in Fig. 2.
[Fig. 11] Fig. 11 is an enlarged view of an area in an eighth embodiment that corresponds to area B in Fig. 2.
[Fig. 12] Fig. 12 is an enlarged view of an area in a ninth embodiment that corresponds to area B in Fig. 2.
[Fig. 13A] Fig. 13A is an enlarged view of the area that corresponds to area B in Fig. 2 in a comparative example.
[Fig. 13B] Fig. 13B is a diagram illustrating an issue in a comparative example.

### Detailed Description of Embodiments

Embodiments of the present invention will next be described with reference to the drawings. The present invention can be suitably applied to metal injection molding machines, especially those that inject metal having low viscosity when molten. However, the present invention can also be applied to injection molding machines that inject resin. In the following description, the X-direction refers to the axial direction of cylinder 32, the injection direction being referred to as the +X-direction, and the direction opposite to the injection direction being referred to as the -X-direction. Terms such as "forward," "rearward," "front," "rear" are defined with respect to the injection direction. In addition, "radial direction" is defined based on central axis CL of cylinder 32.

### First Embodiment

### Overall Configuration of Injection Molding Machine

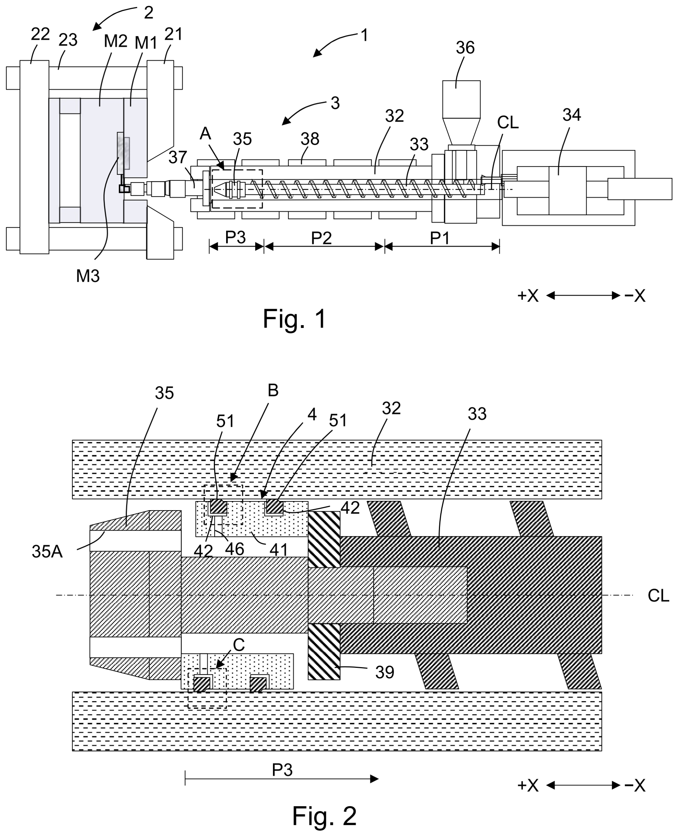

Fig. 1 shows a schematic front view of the first embodiment of injection molding machine 1. Injection molding machine 1 is a horizontal metal injection molding machine that injects molten metals such as magnesium alloys and aluminum alloys. Injection molding machine 1 roughly comprises mold-clamping unit 2 that clamps a mold, and injection unit 3 that heats, melts, and injects the metal material to be injected.

### Mold-Clamping Unit 2

Mold-clamping unit 2 comprises fixed platen 21 that is fixed to a bed (not shown) and on which fixed mold M1 is mounted, and movable platen 22 that can slide on the bed and on which movable mold M2 is mounted. A mold-clamping housing (not shown) that can slide on the bed is provided on the opposite side of movable platen 22 from fixed platen 21, and fixed platen 21 and the mold-clamping housing are connected by a plurality of tie bars 23. A link mechanism (not shown) is provided between movable plate 22 and the mold-clamping housing to open and close the mold. The link mechanism is driven by an electric ball screw. Instead of the link mechanism, a hydraulic type of mold clamping cylinder may be provided. Cavity M3 into which the molten metal is injected is formed between fixed mold M1 and movable mold M2.

### Injection Unit 3

Injection unit 3 is provided on a base (not shown). Injection unit 3 comprises hollow cylinder 32 that heats and melts the metal material to be injected, screw 33 that is housed in cylinder 32, and drive mechanism 34 that drives screw 33. Screw 33 is coaxial with cylinder 32. Screw 33 is driven in the +X- and -X-directions as well as rotated by drive mechanism 34. Heaters 38 that heat and melt the metallic material are provided on the outer circumference of cylinder 32.

Cylinder 32 is generally divided from rear to front into supply section P1, compression section P2, and measurement section P3. Supply section P1 is provided with hopper 36 into which pellet-shaped metal material is supplied. The metal material is heated by heaters 38 and is conveyed to compression section P2. The metal material is compressed, heated, and kneaded in compression section P2 to a molten state, and then transferred to measurement section P3. Measurement section P3 measures the amount of molten metal to be injected in one injection cycle (shot). Screw 33 has screw head 35 at its front end in the X-direction. Injection nozzle 37 that supplies molten metal into cavity M3 is attached to the end of cylinder 32.

### Backflow Prevention Device 4

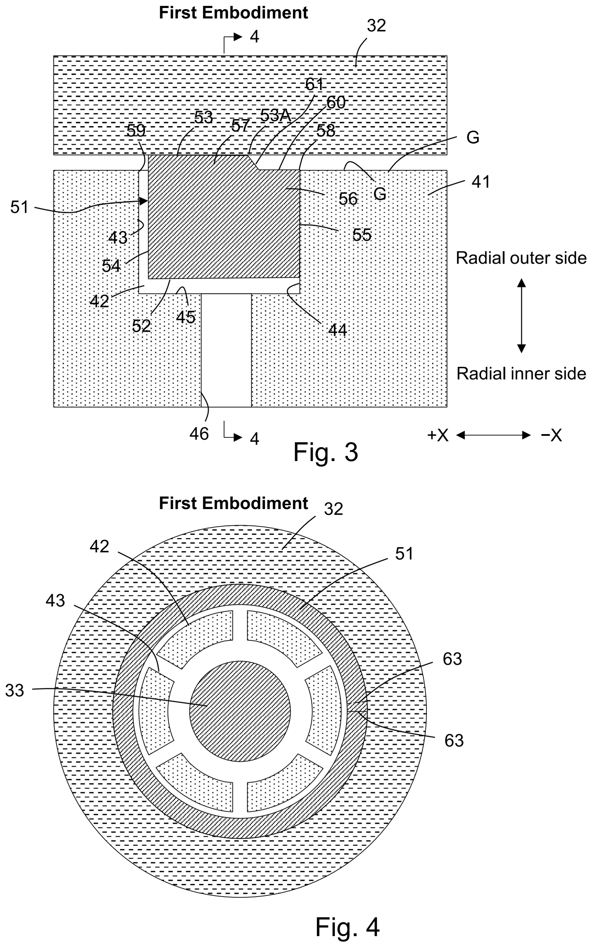

Fig. 2 shows a partial detailed view of the forward portion of cylinder 32 (enlarged view of area A in Fig. 1). In Fig. 2, for the sake of convenience, the upper side above central axis CL of cylinder 32 shows the state of backflow prevention device 4 during injection, and the lower side shows the state of backflow prevention device 4 during measurement. Fig. 3 is an enlarged view of area B in Fig. 2 showing the positional relationship between annular groove 42 and piston ring 51. In other words, Fig. 3 shows the state during injection (the state of backflow prevention ring 41 shown on the upper side of Fig. 2). Fig. 4 is a cross-sectional view along line 4-4 in Fig. 3.

As shown in Fig. 2, backflow prevention device 4 is provided in measurement section P3 of cylinder 32 of injection unit 3 to prevent backflow of the metal material to be injected. Backflow prevention device 4 comprises backflow prevention ring 41 made of a hollow cylindrical member of metal, and backflow prevention ring 41 includes annular grooves 42 that face the inner surface of cylinder 32 of injection unit 3. Backflow prevention device 4 further comprises piston rings 51 that are fitted into respective annular grooves 42 of backflow prevention ring 41. Backflow prevention ring 41, annular grooves 42, and piston rings 51 are coaxial with cylinder 32. Annular grooves 42 are provided along the outer circumference of backflow prevention ring 41 and have the same cross-section at each angular position around central axis CL of cylinder 32.

In the present embodiment, backflow prevention ring 41 has two annular groove 42 with one piston ring 51 fitted in each annular groove 42, but at least one annular groove 42 and one piston ring 51 are sufficient.

Piston ring 51 is a circular sealing component that fits into annular groove 42 of backflow prevention ring 41 and divides the front and rear of backflow prevention ring 41. Piston ring 51 is made of metal. As shown in Fig. 4, piston ring 51 includes end portions 63 each having stepped portions and is fitted into annular groove 42 such that the stepped portions of the two end portions 63 overlap in the circumferential direction. As a result, the diameter of piston ring 51 changes as the stepped portions of both end portions 63 shift in the circumferential direction in response to pressure applied to inner surface 52 and outer surface 53 of piston ring 51. Piston ring 51 has the same cross section at each angular position around central axis CL of cylinder 32 with the exception of the vicinity of the two end portions 63.

As shown in Fig. 2, push plate 39 in the form of a disk that is provided with a central hole through which screw head 35 passes is fixed to screw 33. Backflow prevention ring 41 is inserted into screw 33 between the front end of screw head 35 in the injection direction and push plate 39 to the rear in the injection direction. The outer diameters of screw head 35 and push plate 39 are larger than the inner diameter of backflow prevention ring 41, and the length of backflow prevention ring 41 in the X-direction is smaller than the distance between screw head 35 and push plate 39 in the X-direction. Therefore, backflow prevention ring 41 can move in the X-direction while being restricted by screw head 35 and push plate 39.

As shown in area B of Fig. 2 and Fig. 3, when the molten metal is injected, screw 33 moves forward in the +X-direction and backflow prevention ring 41 moves rearward in the -X-direction relative to screw 33. Backflow prevention ring 41 collides with push plate 39 and prevents the measured molten metal that has been measured in front of screw 33 from leaking rearward during injection (when screw 33 moves forward). As shown in area C of Fig. 2, when the molten metal is measured, screw 33 moves backward in the -X-direction and backflow prevention ring 41 moves forward in the +X-direction relative to screw 33. Backflow prevention ring 41 collides with screw head 35, but the molten metal to the rear of push plate 39 passes along flow path 35A and is supplied to the front space of screw head 35. Thus, backflow prevention ring 41 functions as a type of valve.

Through-holes 46 that pass through backflow prevention ring 41 in the radial direction connect to forward annular groove 42 with respect to the injection direction. Molten metal under high pressure flows into through-holes 46 and exerts radially outward pressure on piston ring 51. This pressure presses piston ring 51 against the inner wall of cylinder 32 and enhances the sealing of piston ring 51. Through-holes 46 are not connected to the rearward annular groove 42. However, some of the molten metal exerts pressure on inner surface 52 of the rearward piston ring 51 through the gap between the front piston ring 51 and cylinder 32, the gap between backflow prevention ring 41 and cylinder 32, and rearward annular groove 42. Thus, both forward and rearward piston rings 51 contribute to improved sealing performance.

Although the provision of through-holes 46 improves sealing performance, piston rings 51 are subjected to high pressure, and this pressure tends to increase abrasion of piston rings 51. Whether or not to provide through-holes 46 is appropriately determined by considering sealing performance as opposed to suppression of wear of piston rings 51. Through-holes 46 may be provided in both annular grooves 42, through-holes 46 may be provided only in rearward annular groove 42, or through-holes 46 may not be provided in either annular groove 42. However, the provision of through-holes 46 only in the forward annular groove 42 facilitates equalization of the amount of wear of forward and rearward piston rings 51.

Other than the presence or absence of through-holes 46, forward annular groove 42 and rearward annular groove 42 have the same configuration. The following description will therefore mainly refer to forward annular groove 42 and piston ring 51 fitted in forward annular groove 42.

### Backflow Prevention Device 104 of Comparative Example

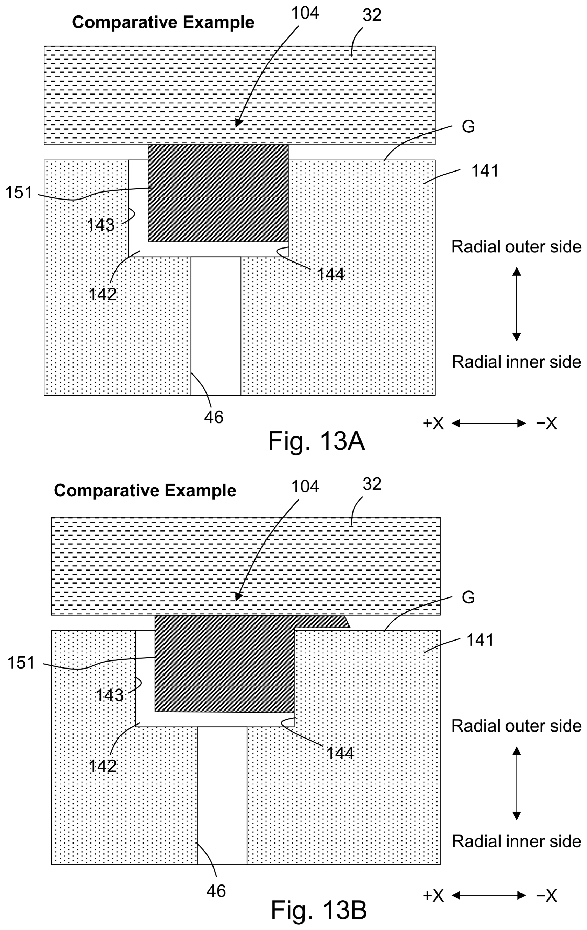

Backflow prevention device 104 of a comparative example will next be described. Fig. 13A is an enlarged view of an area that corresponds to area B in Fig. 2. Annular groove 142 and piston ring 151 have a rectangular cross section. As mentioned above, piston ring 151 is pressed against the inner wall of cylinder 32 because piston ring 151 is subjected to outward pressure in the radial direction. During injection, piston ring 151 is pressed against the rear side surface 144 of annular groove 142 because the molten metal flows in the -X-direction through the gap between backflow prevention ring 141 and cylinder 32 into annular groove 142. During measurement, piston ring 151 is pressed against the front side surface 143 of annular groove 142 (not shown), but since the speed of screw 33 is higher during injection, the pressure exerted on piston ring 151 against the side surface of annular groove 142 is greater during injection.

Fig. 13B shows a state in which piston ring 151 is deformed. Piston ring 151 is made of relatively soft metal. Therefore, when pushed radially outward and in the -X-direction, piston ring 151 may be deformed, and part of piston ring 151 may enter gap G in the -X-direction between backflow prevention ring 141 and cylinder 32. If such a situation occurs, not only will the wear of piston ring 151 increase, but the part of piston ring 151 that has entered gap G between backflow prevention ring 141 and cylinder 32 may damage cylinder 32.

### Shape of Annular Groove 42 and Piston Ring 51

Referring mainly to Fig. 3, annular groove 42 and the shape of piston ring 51 will be described in more detail. Annular groove 42 includes front side surface 43, rear side surface 44, and bottom surface 45. Bottom portion 45 is the deepest part of annular groove 42 and divides front side surface 43 and rear side surface 44. Front side surface 43 is a plane perpendicular to central axis CL of cylinder 32. Through-hole 46 connects to bottom surface 45.

Piston ring 51 includes inner circumferential surface 52, outer circumferential surface 53, front side surface 54, and rear side surface 55. Inner circumferential surface 52 divides front side surface 54 and rear side surface 55. Inner circumferential surface 52 faces bottom surface 45 of annular groove 42. Front side surface 54 is a plane perpendicular to central axis CL of cylinder 32 and faces front side surface 43 of annular groove 42. Rear side surface 55 is a plane perpendicular to central axis CL of cylinder 32 and faces rear side surface 44 of annular groove 42.

Piston ring 51 includes housed portion 56 that is accommodated in annular groove 42 and protruding portion 57 that is outside annular groove 42. Outer circumferential surface 53 of piston ring 51 is located radially outside annular groove 42. Rearward end point 53A of outer circumferential surface 53 in the injection direction is forward in the injection direction relative to the rearward end (rear side surface 55) of housed portion 56 in the injection direction. The outer diameter of piston ring 51 is smaller at its rearward portion in the injection direction than at its forward portion in the injection direction. Outermost portion 58 in the radial direction of the rearward end of housed portion 56 is located at approximately the same position as opening 59 of annular groove 42 in the radial direction. As described above, piston ring 51 tends to enter gap G between backflow prevention ring 41 and cylinder 32 on the -X-direction side. However, in the present embodiment, protruding portion 57 is not located near gap G, with the result that piston ring 51 is less likely to enter gap G.

The surface that connects rearward end point 53A of outer circumferential surface 53 and outermost portion 58 of the rearward end of housed portion 56 in the radial direction includes cylindrical surface 60 whose central axis is central axis CL of cylinder 32, and inclined surface 61 that connects cylindrical surface 60 and rearward end portion 53A of outer circumferential surface 53 and that is inclined with respect to central axis CL of cylinder 32. As a result, piston ring 51 can be easily distanced from gap G, and piston ring 51 is therefore less likely to enter gap G. The diameter of cylindrical surface 60 is constant in the X-direction, but alternatively, may increase in the +X-direction.

Other embodiments of the present invention will be described below. In the embodiments shown below, configurations and effects that are the same as those of the first embodiment will be omitted from the explanation.

### Second Embodiment

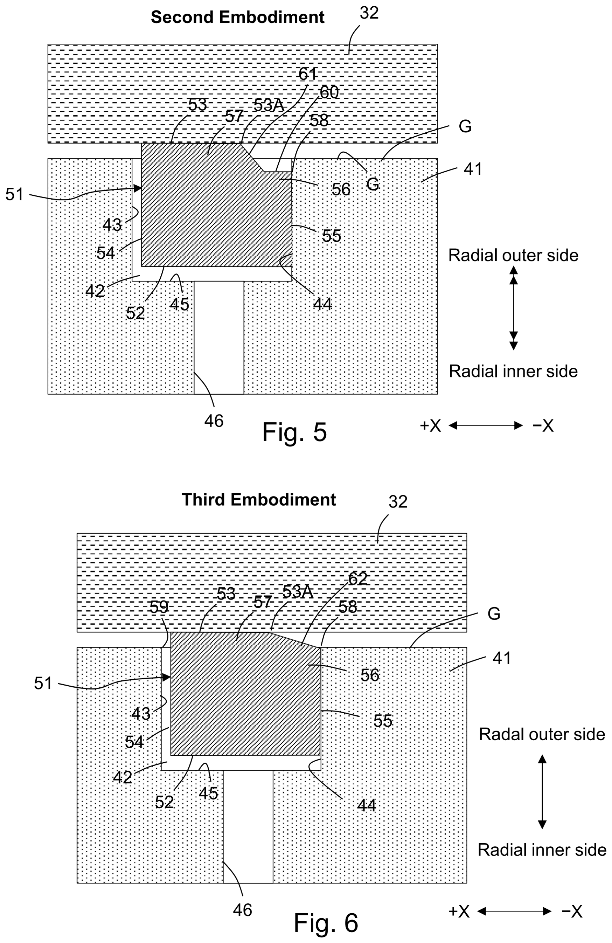

Fig. 5 shows a second embodiment and is an enlarged view of the area that corresponds to area B in Fig. 2. In the present embodiment, outermost portion 58 in the radial direction of the rearward end of housed portion 56 is inside annular groove 42, but the configuration is otherwise the same as that of the first embodiment. As piston ring 51 wears with use, the thickness of protruding portion 57 may gradually decrease, and eventually, cylindrical surface 60 may contact cylinder 32. However, despite the reduction of thickness of piston ring 51 through wear, more time is needed for cylindrical surface 60 to come into contact cylinder 32 because cylindrical surface 60 is inside annular groove 42. The present embodiment therefore can extend the lifespan of piston ring 51 and can decrease the frequency of replacing piston ring 51.

### Third Embodiment

Fig. 6 shows a third embodiment and is an enlarged view of the area that corresponds to area B in Fig. 2. Surface 62 that connects rearward end point 53A of outer circumferential surface 53 and outermost portion 58 in the radial direction of the rearward end of housed portion 56 is inclined overall with respect to central axis CL of cylinder 32. The configuration is otherwise the same as that of the first embodiment. Outermost portion 58 in the radial direction of the rearward end of housed portion 56 is at approximately the same position as opening 59 of annular groove 42 in the radial direction. The present embodiment has almost the same effect as the first embodiment, but the shape of surface 62 that connects rearward end point 53A of outer circumferential surface 53 and outermost portion 58 in the radial direction of the rearward end of housed portion 56 is simple, thereby facilitating machining of piston ring 51.

### Fourth Embodiment

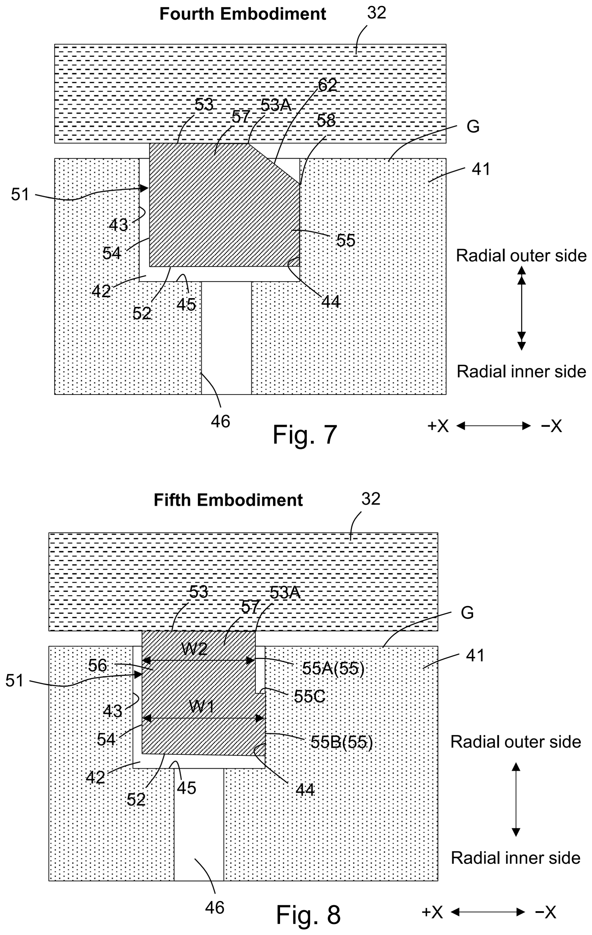

Fig. 7 shows a fourth embodiment and is an enlarged view of the area that corresponds to area B in Fig. 2. Outermost portion 58 in the radial direction of the rearward end of housed portion 56 is inside annular groove 42, but the configuration is otherwise the same as that of the third embodiment. The present embodiment has the same effect as the second embodiment. That is, despite the reduction of the thickness of piston ring 51 due to wear, more times is needed for outermost portion 58 to contact cylinder 32 because outermost portion 58 is inside annular groove 42. The present embodiment can extend the lifespan of piston ring 51 and can decrease the frequency of replacing piston ring 51.

### Fifth Embodiment

Fig. 8 shows a fifth embodiment and is an enlarged view of the area that corresponds to area B in Fig. 2. Piston ring 51 includes housed portion 56 that is accommodated in annular groove 42 and protruding portion 57 that is located outside annular groove 42. Outer circumferential surface 53 of piston ring 51 is located radially outward of annular groove 42. Rearward end point 53A of outer circumferential surface 53 in the injection direction is forward in the injection direction relative to the innermost end of housed portion 56 in the injection direction (radially inner side portion 55B of rear side surface 55). The outer diameter of piston ring 51 is smaller at the rear in the injection direction than at the front in the injection direction. As described above, piston ring 51 is susceptible to entering gap G in the -X-direction between backflow prevention ring 41 and cylinder 32. However, in the present embodiment, protruding portion 57 is not located near gap G, and piston ring 51 is therefore less likely to enter gap G.

Rear side surface 55 of piston ring 51 includes stepped portion 55C. Rear side surface 55 of piston ring 51 includes radially outer side portion 55A and radially inner side portion 55B divided by stepped portion 55C. Radially outer side portion 55A and radially inner side portion 55B face rear side surface 44 of annular groove 42. Front side surface 54 is a plane perpendicular to central axis CL of cylinder 32 and faces front side surface 43 of annular groove 42.

Stepped portion 55C is provided only on piston ring 51, and rear side surface 44 of annular groove 42 is a plane orthogonal to central axis CL of cylinder 32. Radially outer side surface 55A of rear side surface 55 of piston ring 51 is forward in the injection direction relative to radially inner side surface 55B. During injection, piston ring 51 moves in the -X-direction relative to annular groove 42, and radially inner side surface 55B of rear side surface 55 of piston ring 51 contacts rear side surface 44 of annular groove 42. At this time, radially outer side surface 55A of rear side surface 55 of piston ring 51 cannot contact rear side surface 44 of annular groove 42. Therefore, a part of piston ring 51 is less likely to enter gap G on the -X-side between backflow prevention ring 41 and cylinder 32.

As mentioned above, radially outward pressure is applied to piston ring 51, but this pressure can be easily adjusted in the present embodiment. The pressure at which piston ring 51 presses against the inner surface of cylinder 32 is generated by the pressure applied to inner circumferential surface 52 of piston ring 51. If the pressure applied to inner circumferential surface 52 of piston ring 51 is P1, the pressure at which piston ring 51 presses against cylinder 32 is P2, the width of inner circumferential surface 52 of piston ring 51 is W1, and the width of outer circumferential surface 53 of piston ring 51 is W2, P2 = (W1 / W2) x P1. The pressure at which piston ring 51 presses against cylinder 32 can be easily adjusted by changing the ratio of the width W1 of inner circumferential surface 52 of piston ring 51 to the width W2 of outer circumferential surface 53.

### Sixth Embodiment

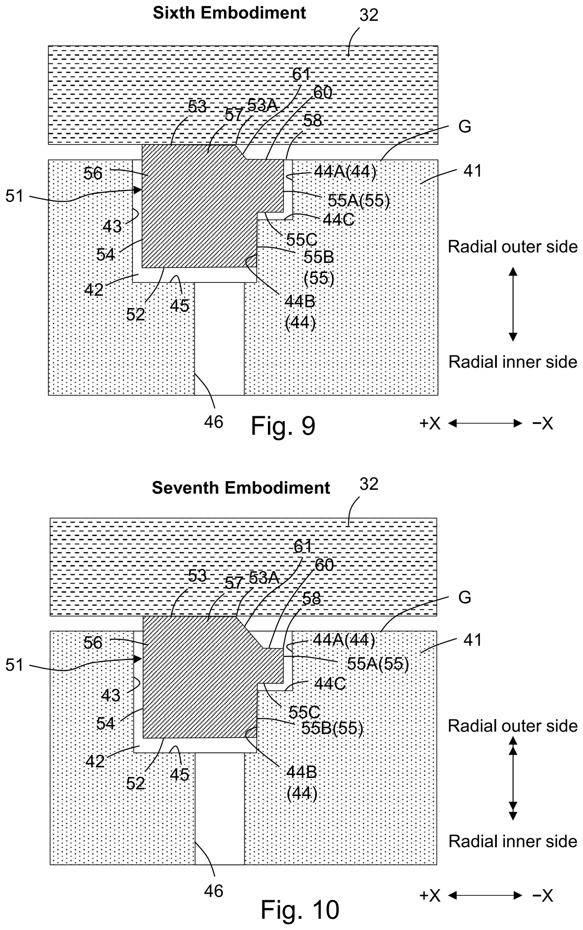

Fig. 9 shows a sixth embodiment and is an enlarged view of the area that corresponds to area B in Fig. 2. Rear side surface 44 of annular groove 42 includes radially outer side portion 44A, radially inner side portion 44B, and stepped portion 44C, radially outer side portion 44A and radially inner side portion 44B being divided by stepped portion 44C. The inner diameter of piston ring 51 is larger at the rear in the injection direction than at the front in the injection direction. When piston ring 51 moves in the -X-direction relative to annular groove 42 during injection, radially inner side portion 55B of rear side surface 55 of piston ring 51 can contact radially inner side portion 44B of rear side surface 44 of annular groove 42, while radially outer side portion 55A cannot contact radially outer side portion 44A of rear side surface 44 of annular groove 42.

Rearward end point 53A of outer circumferential surface 53 in the injection direction is forward in the injection direction relative to the rearmost end of housed portion 56 in the injection direction (radially outer side portion 55A of rear side surface 55). The outer diameter of piston ring 51 is smaller at the rear in the injection direction than at the front in the injection direction. Since piston ring 51 is further away from gap G, piston ring 51 is less likely to enter gap G.

### Seventh Embodiment

Fig. 10 shows a seventh embodiment and is an enlarged view of the area that corresponds to area B in Fig. 2. In the present embodiment, outermost portion 58 in the radial direction of the rearward end of housed portion 56 is inside annular groove 42, but the configuration is otherwise the same as that of the sixth embodiment. As piston ring 51 wears with use, the thickness of protruding portion 57 may gradually decrease, and eventually, cylindrical surface 60 may contact cylinder 32. However, despite the reduction of the thickness of piston ring 51 through wear, more time must pass before cylindrical surface 60 contact cylinder 32 because cylindrical surface 60 is inside annular groove 42. The present embodiment can extend the lifespan of piston ring 51 and can decrese the frequency of replacing piston ring 51. In addition, because piston ring 51 is further away from gap G, piston ring 51 is further less likely to enter gap G.

### Eighth Embodiment

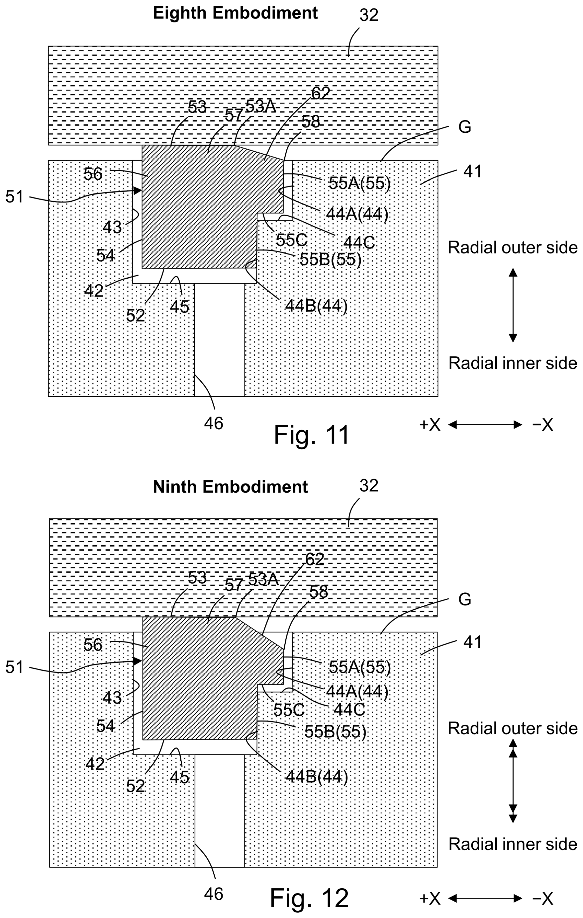

Fig. 11 shows an eighth embodiment and is an enlarged view of the area that corresponds to area B in Fig. 2. Surface 62 that connects rearward end point 53A of outer circumferential surface 53 and outermost portion 58 in the radial direction of the rearward end of housed portion 56 is inclined overall with respect to central axis CL of cylinder 32. The configuration is otherwise the same as that of the sixth embodiment. Outermost portion 58 in the radial direction of the rearward end of housed portion 56 is at approximately the same position as opening 59 of annular groove 42 in the radial direction. The present embodiment has almost the same effect as the sixth embodiment, but the shape of surface 62 that connects rearward end point 53A of outer circumferential surface 53 and outermost portion 58 in the radial direction of the rearward end of housed portion 56 is simple, thereby facilitating machining of piston ring 51.

### Ninth Embodiment

Fig. 12 shows a ninth embodiment and is an enlarged view of the area that corresponds to area B in Fig. 2. The present embodiment is a combination of the fourth and eighth embodiments and therefore achieves the effects of the fourth and eighth embodiments. In addition, because piston ring 51 in the present embodiment is further away from gap G compared to the fourth embodiment, piston ring 51 is further less likely to enter gap G.

While preferred embodiments of the invention have been shown and described in detail, it is to be understood that various changes and modifications can be made without departing from the intent or scope of the appended claims.

### Reference Number List

- 3: injection molding machine
- 4: backflow prevention device
- 32: cylinder
- 33: screw
- 41: backflow prevention ring
- 42: annular groove
- 44: rear side surface of annular groove
- 44A: radially outer side portion of rear side surface of annular groove
- 44B: radially inner side portion of rear side surface of annular groove
- 46: through-hole
- 51: piston ring
- 53: outer circumferential surface
- 53A: rearward end point of outer circumferential surface
- 55: rear side surface of piston ring
- 55A: radially outer side portion of rear side surface of piston ring
- 55B: radially inner side portion of rear side surface of piston ring
- 56: housed portion

## Claims

1. A backflow prevention device of an injection unit, comprising:
a backflow prevention ring that includes at least one annular groove that faces the inner surface of a cylinder of said injection unit; and
at least one piston ring, each said at least one piston ring being fitted in a respective one of said at least one annular groove, wherein
each said at least one piston ring includes a housed portion that is accommodated in a respective one of said at least one annular groove and an outer circumferential surface that is located radially outward from said respective one of said at least one annular groove, and
the rearward end point of said outer circumferential surface in an injection direction is forward of the rearmost end of said housed portion in said injection direction.

2. The backflow prevention device of said injection unit according to claim 1, wherein
a surface that connects said rearward end point of said outer circumferential surface and said rearward end of said housed portion includes:
a cylindrical surface whose central axis is the central axis of said cylinder; and
an inclined surface that connects a forward end of said cylindrical surface in said injection direction and said rearward end point of said outer circumferential surface and that is inclined with respect to said central axis of said cylinder.

3. The backflow prevention device of said injection unit according to claim 1, wherein all of the surface that connects said rearward end point of said outer circumferential surface and said rearward end of said housed portion is inclined with respect to said central axis of said cylinder.

4. The backflow prevention device of said injection unit according to claim 2 or 3, wherein the outermost portion in a radial direction of said rearward end of said housed portion is located at approximately the same position in said radial direction as an opening of said annular groove.

5. The backflow prevention device of said injection unit according to claim 2 or 3, wherein the outermost portion in the radial direction of said rearward end of said housed portion is inside said annular groove.

6. The backflow prevention device of said injection unit according to any one of claims 1 to 5, wherein said at least one annular groove and said at least one piston ring each have a rear side surface in said injection direction, and
said rear side surface of said at least one annular groove and said rear side surface of said at least one piston ring can contact each other only at their respective radially inner side portions.

7. The backflow prevention device according to claim 6, wherein when said radially inner side portion of said rear side surface of said at least one piston ring contacts said radially inner side portion of said rear side surface of said at least one annular groove, a gap is formed between said radially outer side portion of said rear side surface of said at least one piston ring and said radially outer side portion of said rear side surface of said at least one annular groove.

8. The backflow prevention device according to claim 7, wherein said radially inner side portion of said rear side surface of said at least one annular groove and said radially inner side portion of said rear side surface of said at least one piston ring are in a plane orthogonal to the central axis of said cylinder.

9. The backflow prevention device according to claim 6, wherein the radially outer side portion of said rear side surface of said at least one piston ring is forward in said injection direction relative to said radially inner side portion of said rear side surface of said at least one piston ring.

10. The backflow prevention device according to claim 9, wherein said rear side surface of said at least one annular groove is a plane orthogonal to the central axis of said cylinder.

11. The backflow prevention device according to any one of claims 1 to 10, wherein the outer diameter of said piston ring is smaller at a rear portion in said injection direction than at a front portion in said injection direction.

12. An injection unit, comprising:
the backflow prevention device according to any one of claims 1 to 11;
said cylinder;
a screw that is housed in said cylinder; and
an injection nozzle that is attached to the end of said cylinder.
